# EUROPEAN PATENT SPECIFICATION

(11) **EP 3 398 731 B1**
(45) Date of publication and mention of the grant of the patent: **08.01.2020**
(21) Application number: 16880804.6
(22) Date of filing: 15.11.2016
(51) Int. Cl.: B25J 11/00, A47J 27/14, A47J 47/01, B25J 9/00

(54) **COOKING ROBOT**
KOCHROBOTER
ROBOT DE CUISSON

(30) Priority: 31.12.2015 CN 201511032244
(43) Date of publication of application: 07.11.2018
(73) Proprietor: Qingdao Feast Robot Co., Ltd., Shandong (CN)
(72) Inventor: GE, Wu, Wuliqiao Chaoyang District Beijing 100024 (CN)
(74) Representative: Vitina, Maruta
(86) International application number: PCT/CN2016/105876
(87) International publication number: WO 2017/114014

(56) References cited:
- WO-A1-2008/083516
- WO-A1-2014/131205
- CN-A- 1 545 020
- CN-A- 101 006 833
- CN-A- 105 167 567
- CN-A- 105 459 127
- CN-U- 205 521 418
- TW-U- M 435 901
- US-B1- 7 174 830

## Description

### TECHNICAL FIELD

The present invention relates to the field of automation and intelligence control of household appliances, and specifically relates to a cooking robot.

### BACKGROUND TECHNOLOGY

Cooking is the most common daily task of the most Chinese housewives or househusbands, but the Chinese dishes require lots of raw materials and a complex production process, many modern residents may not accomplish the cooking with ease, and a kitchen often becomes a severely affected area for the family health. The Chinese dishes are delicious but difficult to learn, requiring much time and effort. Moreover, the oily fume generated from the kitchen is also harmful to the human body. Based on this, household appliances, especially industry of kitchen appliances, have become a new field in urgent need of automation and intelligence. At present, there are cooking machines, cooking robots and the like in the prior patent applications. A patent application (WO2014/131205) discloses a programmable and program-controlled smart cooking machine, including: a machine housing and, arranged within the machine housing, a wok, an electromagnetic heating coil, a wok flipping apparatus, a wok working position control apparatus, a wok lid, a wok lid control apparatus, an electromagnetic heating control apparatus, a raw material automatic feeding apparatus, an additive automatic feeding apparatus, an au-tomatic dish serving apparatus, an automatic dishwashing apparatus, and an electrical control device. The electromagnetic heating coil surrounds the outer wall of the wok and is controlled by the electromagnetic heating control apparatus to heat the wok. The wok flipping apparatus is connected to the wok to control the direction and speed of rotation of the wok. The wok working position control apparatus is used for fixing the wok and for controlling the wok to flip, thus allowing the wok to reach a corresponding working position to perform a corresponding operation. The electrical control device is used for receiving a predetermined recipe command and for issuing corresponding control commands on the basis of the recipe command. The remaining apparatus respectively are connected to the electrical control device to receive the control commands. Another patent application (WO2008/083516) discloses a full automatic roboticized cooking system which can complete all kinds of cooking process in kitchens on time. The system includes a full automatic intelligent subsystem of washing vegetables and dishes, disinfecting, storing and making fresh, a full automatic intelligent subsystem of cutting machine, a full automatic intelligent subsystem of distributing machine, a full automatic intelligent subsystem of cooking, a full automatic intelligent subsystem of boiler and a full automatic intelligent control subsystem of numerical menu software. The system can be used in a kitchen in a house or a restaurant. Another patent application (CN 1545020A) discloses a cooking robot. In a rectangular cupboard box, it orderly gathers the devices: a basin and bowl storing and carrying device, a cooking-pan and blending device, a material storing and adding device, a dish output and storage device, a range-hood washing device and a computer control system device, each of which is connected with a control circuit by various sensors, and uses the computer to control and operate the cooking tools, not only safe and reliable but clean and healthy; and it can au-tomatically select and place materials into the cooking pan, ignite and heat them, real-timely adjust the duration and degree, fry and stir; automatically flavour and thicken soup; automati-cally select to take a basin or a soup bowl, pour the dish out of the pan into a basin, and preserve heat to store the dish; automatically perform real-time absorption and exhaust of lampblack, wash, sterilize and disinfect. It is controlled by the display and keyboard or remotely by the network.

However, in the current well known intelligent and automated technologies for cooking, the cooking machine and the cooking robot, before frying dishes, both require manually preparing main and auxiliary ingredients in the kitchen and manually and semi-automatically charging, because a frying pot is of an open or semi-open structure, and a raw material storage mechanism is difficult to clean and very inconvenient to dismounting and mounting, resulting in problems: the cooking machine and the cooking robot still require artificially washing and cutting vegetables, nothing but only reduce small amount of labor in the frying process, and also have problems that the charging is inaccurate and incorrect, the timing and quantitative charging may not be achieved, the oil fume pollutes the indoor environment, the pot and stove also require manually cleaning after frying, and the like, which not only is inconvenient, but also may not reduce manpower and time cost. Therefore, the housewives may not be essentially free from the kitchen.

### SUMMARY OF THE INVENTION

In order to overcome the technical problems of requiring manually and semi-automatically preparing raw materials and inaccurately charging raw materials and the like in the prior art, the present invention provides a cooking robot which automatically controls cooking and finishing of the dishes by a system without preparing the raw materials. The computer program, control technology and other mechanical structures, which are not specifically described in this specification, are all technologies already widely used in the prior art, and these technologies are not innovations of the present invention, so that the technologies will not be described in detail here due to the page limitation, but may be acquired by an ordinary person skilled in the art through conventional means, and these contents all will be a part of the specification.

A cooking robot of the present invention is provided, comprising a machine body, a charging mechanism, a feeding mechanism, a control system, a cooking mechanism and a dishes collecting mechanism; the control system is connected to the charging mechanism, the feeding mechanism, the cooking mechanism and the dishes collecting mechanism respectively, and controls the operation of each of these mechanisms. A cooking control program is provided in the control system.

The charging mechanism includes a feed inlet, a positioning bin and a raw material accommodating device. Wherein the raw material accommodating device is a structure which is independent from the feed inlet and the positioning bin and may be detached from the cooking robot; for example, the raw material accommodating device may be a material accommodating plate or a material accommodating box divided into a plurality of independent accommodating spaces; a plurality of independent individuals are provided at the raw material accommodating device according to the actual demand of the raw materials required for cooking the dishes, and configured to respectively accommodate the corresponding raw materials hermetically; uniformly ordered and delivered from a factory, the raw material of the dishes required to be cooked are respectively and independently packaged in the independent individuals in the factory according to the recipe, thereby avoiding steps of selecting, washing and cutting vegetables in the kitchen in the past. Of course, according to individual needs of a user, all or part of the raw material may be placed into the raw material accommodating device, for example, when the cooking robot is provided with a water and oil filling mechanism, the raw material of the dishes may not include water or oil; for another example, when the user does not prefer spicy food, the related raw material of the dishes may save the corresponding raw material storage individual. The raw material accommodating device is provided with an identification device; the control system identifies the dishes to be cooked in the raw material accommodating device through the identification device, and controls the feeding mechanism to charge the raw material accommodated in the individuals of the raw material accommodating device into the cooking mechanism to cook according to the cooking requirement of the corresponding dishes; for example, the system may read the identity of the raw material hermetically stored in each independent individual in the raw material accommodating device through the identification device, and control the feeding mechanism to charge the raw material required by the dishes into the cooking mechanism under the control program according to parameters such as time, temperature, raw material feeding order and raw material feeding amount which are detected by the control system, and control the cooking mechanism to accomplish cooking, and then put the dishes after being cooked into a dishes collecting container. A sealing mechanism (e.g. a bin gate) and an automatic ejection mechanism may be provided at the feed inlet, thereby facilitating putting in and taking out of the raw material accommodating device and residual waste. The positioning bin is further provided with a fixing mechanism which plays a role of fixing or loosening the raw material accommodating device during putting in or taking out the raw material accommodating device.

The control system may add and/or delete and/or replace and/or update the recipe by storage in advance and/or an external memory device and/or a network afterwards. Technologies of dish information download, dish analysis and automatic control based on the dish recipe are all prior arts, so these technologies will not be described in detail herein.

The raw material accommodating device may accommodate the raw material required by one or more dishes, for example, when the dishes requires relatively simple raw materials, the same raw material accommodating device may also accommodate many dishes; the raw material accommodating device is a recyclable raw material accommodating device or a disposable raw material accommodating device. The parameters such as size dimension, thickness and space size of each individual of the raw material accommodating device may be correspondingly set according to the specific data of the raw materials of the dishes, and these data may be identified by the control system through the identification device, the control system controls the feeding device to sequentially dismantle the sealing devices of the individuals of the raw material accommodating device one by one according to the recipe, so as to charge the cooking mechanism.

The feeding mechanism includes a dismantling device and a relative movement system, the relative movement system is connected to the cooking mechanism and/or the dismantling device and/or the positioning bin to relatively move between at least two of the positioning bin, the dismantling device and the cooking mechanism. The relative movement system may include at least one lifting mechanism; the cooking mechanism, the dismantling device and the positioning bin share one lifting mechanism or are respectively provided with a lifting mechanism. All or only one of the cooking mechanism, the dismantling device and the positioning bin may be connected to the relative movement system. The relative movement system may control one of the cooking mechanism, the dismantling device and the positioning bin to move. For example, when feeding the raw material of the dishes, the control system may control the positioning bin to move to the cooking mechanism according to the actual need for cooking the dishes, thereby reducing the impact for feeding material on the cooking mechanism, on the contrary, the control system may also control the cooking mechanism to move to the positioning bin; by such analogy, the control system may also control the dismantling device to move to the cooking mechanism and/or the positioning bin.

The dismantling device is a manipulator, and the relative movement system is a first lifting device; one end of the manipulator is mounted on the first lifting device, and the other end thereof is provided with an unsealing device; the first lifting device is provided on an inner wall of the machine body; the unsealing device is a spiny portion and/or a knife and/or a pair of scissors and/or a cone. At this moment, both or one of the cooking mechanism and the positioning bin may be connected to the first lifting device. When there is a need to charge the dishes to the cooking mechanism according to instruction of the control system, the cooking mechanism moves to the positioning bin, or the positioning bin moves to the cooking mechanism, thereby facilitating feeding the raw materials.

The dismantling device is a manipulator for dismantling sealing devices of the plurality of independent individuals containing raw materials including main and auxiliary ingredients therein; and the relative movement system is a first lifting device. One end of the manipulator is mounted on the first lifting device, and the other end thereof is provided with an unsealing device; the unsealing device is a spiny portion and/or a knife and/or a pair of scissors and/or a cone.

Preferably, the identification device is a bar code and/or a two-dimensional code and/or an RFID electronic tag; for example, codes of cooking materials are encoded by a united format, and may include dishes type, smell, taste, color and other information of the cooking materials, and each cooking material corresponds to a unique code of the cooking materials; the codes of the cooking materials consist of a capital letter and four digits, in which the capital letter represents a classification of the cooking materials, and a first digit of the four digits from left to right represents a grouping identification, the same type of the cooking materials may be grouped into one group according to the smell, taste or color of the cooking materials, and the cooking materials in the same group employ the same grouping identification; a second digit and a third digit represent the codes of the cooking materials, a fourth digit represents number identification, and the cooking materials are divided into four types such as main material, auxiliary material, solid condiment and liquid condiment. Of course, according to the actual needs, the identification device may also be used in other ways.

Preferably, a fume and air exhaust mechanism and a pollutant filtering device are provided inside the machine body, the pollutant filtering device filters the cooking fume. Through these devices, on the one hand, it may avoid indoor air pollution; on the other hand, it controls the emission of pollutants to the outdoor atmosphere and has the effect of environmental protection.

Preferably, the control system includes a host, a display and a drive device; the drive device is respectively connected to the charging mechanism, the feeding mechanism, the control system, the cooking mechanism, the dishes collecting mechanism and the fume and air exhaust mechanism; the display is provided on an outer surface of the machine body; a control program is arranged inside the host, and configured to display a control menu and/or a control interface through the display for a user to control the cooking robot. The host of the control system may be a single chip microcomputer and/or PLC and/or industrial control host and the like. The control system is connected to the mechanisms and the parts through the drive device. The user may control the information such as the amount, the taste, the cooking degree and the like of the dishes on the display according to the preset program; for example, the user may select parameters such as amount of raw material, cooking time and added condiments according to information such as personal taste, appetite, preferred rareness of the dishes.

Preferably, the control system further includes a wired or wireless communication module, the communication module is connected to the host for receiving remote control information; the control system further includes an infrared signal transceiver for receiving control signals of a remote controller. The communication module is configured to receive the remote control signal, and specifically may control the cooking robot to cook the dishes in the manner of SMS, WeChat, webpage operation, remote controller control and the like. For example, the user may reserve the raw material accommodating device through a WeChat port or other application ports, and the relevant manufacturer configures the corresponding raw material in the raw material accommodating device in accordance with the user order, and provides a home delivery service. When the cooking robot is provided with the raw material accommodating device, the user may also control the cooking robot as required to make relevant dishes at any time and any place with a network connection.

Preferably, the cooking mechanism is arranged between the charging mechanism and the dishes collecting mechanism, comprising a pot body, a heating device, a stir-frying mechanism and a first overturning mechanism, wherein the pot body and the heating device are connected to the machine body through the first overturning mechanism, and the pot body and the heating device are of a pot-stove integrated structure and/or a pot-stove separated structure; the heating device is an electric heating device and/or a gas heating device, such as an electric furnace, an induction cooker and a gas cooker (natural gas, methane or other fuels). The overturning mechanism may be achieved by a variety of manners, for example, by arranging a horizontal axis, the pot body and the heating device are connected to the machine body through the horizontal axis, and the overturning of the pot body is achieved by a manner of arranging a cylinder on one side of the pot body or the heating device; or, the overturning function may be achieved by a manner of driving the horizontal axis to rotate through a small motor. The overturning mechanism plays a role of overturning the pot body through the overturning mechanism after the dishes being cooked, thereby pouring the dishes out.

The overturning mechanism may be arranged inside a pot lid, or integrated with a manipulator, or mounted in a certain position of the machine body according to the actual needs.

Preferably, the cooking mechanism also includes a pot lid and a second overturning mechanism, the pot lid is connected to the machine body through the second overturning mechanism, and a non-open end of the pot lid and the positioning bin are configured in a fixed connection and/or a detachable connection. The specific setup of the second overturning mechanism may refer to the first overturning mechanism; when the pot lid and the positioning bin are fixedly connected or integrated, the second overturning mechanism plays a role of overturning the raw material accommodating device to the bottom surface through the overturning mechanism, thereby facilitating feeding the raw material by the feeding mechanism.

Preferably, a water supply system is also arranged inside the machine body, the water supply system includes a water filling nozzle and a plurality of spray nozzles, and the water supply system is an external water pipe or a built-in drinking water bucket; the spray nozzles are connected to the control system through the drive device, and wash the cooking mechanism and/or fill the water to the cooking mechanism under the control of the control system; a plurality of drain outlets are further provided on the machine body. The parameters, such as number and mounting position of the spray nozzles and the drain outlets, may be actually set according to the user needs or the specific circumstances of the used cooking mechanism.

Preferably, an oil supply system is also arranged in the machine body, the oil supply system includes a built-in oil barrel or an external oil inlet pipeline, the oil supply system is connected to the control system through the drive device so as to supply oil to the cooking mechanism under the control of the control system.

Preferably, the dishes collecting mechanism includes a dishes collecting container inlet and a dishes container bracket. The dishes container bracket may be connected to the machine body. The dishes collecting container inlet may be provided with a sealing mechanism and an automatic ejecting mechanism and other mechanical structures, thereby facilitating feeding the raw material accommodating device and taking the dishes out. The sealing mechanism is a bin gate.

Preferably, a drying device and/or a sterilizing device are/is further provided on the machine body, the drying device and the sterilizing device are connected to the control system through the drive device to dry the cooking mechanism under the control of the control system; and the sterilizing device is connected to the control system through the drive device so as to sterilize the cooking mechanism and the robot under the control of the control system.

In order to adapt to the requirement of automatic cooking in large quantities, such as large restaurants and school dining halls, and the present invention also provides a robot capable of continuously and automatically cooking.

In addition to the technical features mentioned in the above specification, the cooking robot also includes the following technical features, the cooking robot is further provided with an automatic charging system and an automatic waste recovery system; the automatic charging system and the automatic waste recovery system are respectively connected to the control system; the control system is configured to control the automatic charging system to feed the raw material accommodating device to the feed inlet, and control the automatic waste recovery system to recover the empty raw material accommodating device and the waste raw material. Thus, the requirement of automatic and continuous cooking in large quantities may be achieved.

Preferably, the cooking robot is further provided with an automatic dishes container pushing system and a dishes storage system; the automatic dishes container pushing system and the dishes storage system are respectively connected to the control system; the control system is configured to control the automatic dishes container pushing system to actively add the dishes container to the dishes collecting container inlet, and control the dishes storage system to store the accomplished dishes.

Preferably, the automatic charging system includes at least one storage bin for the raw material accommodating device, the storage bin for the raw material accommodating device is connected to one side of the machine body provided with the feed inlet, and provided with a second lifting device and a first pushing mechanism.

Preferably, the storage bin for the raw material accommodating device is provided with a fresh keeping and/or freezing device.

Preferably, the automatic waste recovery system at least includes a recovering bin for the empty raw material accommodating device connected to one side of the machine body which is not connected to the feed inlet, and a recovering outlet for the empty raw material accommodating device is arranged at a position where the connecting portion of the machine body is at the same height of the feed inlet, and a third lifting device is provided on the recovering bin for the empty raw material accommodating device; a raw material accommodating device conveyor is provided on the positioning bin of the charging mechanism.

Preferably, the automatic dishes container pushing system at least includes a dishes container storage bin, the dishes container storage bin is connected to one side of the machine body provided with the dishes collecting container inlet, and provided with a fourth lifting mechanism and a container pushing mechanism.

Preferably, the dishes container storage bin is provided with a sterilizing device.

Preferably, the dishes storage system includes at least one dishes storage bin; the dishes storage bin is connected to one side of the machine body which is not connected to the dishes collecting container inlet, and a dishes container outlet is arranged at a position where the connecting portion of the machine body is at the same height of the feed inlet, and an automatic lifting shelf is provided at the dishes storage bin; a dishes container conveyor is arranged on the dishes container bracket.

Preferably, a heat preservation device is provided at the dishes storage bin.

In order to further improve the cooking ability of the large cooking robot, the present invention also provides a cooking robot with multi-machine body.

On the basis of the technical solution mentioned in above specification, the cooking robot includes at least two machine bodies of the robot, and the machine bodies share a set of control system and exhaust system.

The beneficial effects of the present invention are that the cooking robot has self-cleaning stove, almost avoids all dirty works in the kitchen, saves time and energy, and is convenient to use and may unskillfully cook a variety of dishes equivalent to those fried by a senior chef without washing, selecting, cutting and frying the vegetables. The sealed machine body may completely eliminate the indoor environmental pollution such as cooking fume, so it is beneficial to human health. Because the raw material and process are strictly controlled and independently sealed without a secondary pollution, moreover, the cooking process completely imitates a manual cooking process through a computer program, thereby it not only ensures the quality and taste of the dishes, but also ensures food safety and achieves standardization, unification and diversification of the dishes. Further, continuous frying, timing frying and remote control frying may be achieved. It may maximally save manpower and material costs, reduce pollution, enhance the user experience and make cooking become a pleasure to reduce family conflicts of the modern home caused by the housework.

The technical solution of the present invention achieves full-automatic (continuous) cooking by a self cleaning function and the like of the stove.

The cooking robot provided by the present invention may achieve continuously cooking dishes on a large scale, and may largely save the operating cost of the public dining hall, the student canteen and the large restaurant.

### BRIEF DESCRIPTION OF THE DRAWINGS

FIG. 1 is a schematic diagram of an appearance of a machine body of a cooking robot of the present invention;
FIG. 2 is a main view and a section view of an I-I line of the machine body of the cooking robot of the present invention;
FIG. 3 is a three-dimensional section view of the I-I line of FIG. 2;
FIG. 4 is a section block diagram of the I-I line of FIG. 2;
FIG. 5 is an enlarged view of an upper half portion of FIG. 4;
FIG. 6 is an enlarged view of a middle portion of FIG. 4;
FIG. 7 is an enlarged view of a lower half portion of FIG. 4;
FIG. 8 is a structure diagram of an embodiment of a raw material accommodating device;
FIG. 9 is a side view and a section location view of an A-A line of the cooking robot of the present invention;
FIG. 10 is a section block diagram of the A-A line of FIG. 9;
FIG. 11 is an enlarged view of an upper half portion of FIG. 10;
FIG. 12 is an enlarged view of a middle portion of FIG. 10;
FIG. 13 is an enlarged view of a lower half portion of FIG. 10;
FIG. 14 is a three-dimensional external view of an embodiment with an automatic and continuous frying function of the present invention;
FIG. 15 is a side view of a B-B line of a continuous frying robot;
FIG. 16 is a section structure diagram of the B-B line of FIG. 15;
FIG. 17 is a three-dimensional schematic diagram of an internal structure of the embodiment with an automatic and continuous frying function of the present invention;
FIG. 18 is a three-dimensional view of a frying robot with two machine bodies;

Among, 1. fume and air exhaust mechanism; 2. lifting mechanism; 3. positioning bin; 4. feed inlet and bin gate; 5. raw material accommodating device; 6. pot lid; 7. control system; 8. stir-frying mechanism; 9. spray nozzle; 10. manipulator; 11. manipulator lifting mechanism; 12. pot; 13. stove; 14. water filling nozzle; 15. dishes container; 16. dishes container bracket; 17. lower water-proof air inlet; 18. drain outlet; 19. independent individuals; 20. second overturning mechanism; 21. first overturning mechanism; 22. conveying device for the raw material accommodating device; 23. recovering bin for the raw material accommodating device; 24. automatic lifting shelf; 25. first pushing mechanism; 26. container pushing mechanism; 27. container conveying device.

### DETAILED DESCRIPTION

In order to understand the technical solution of the present invention more easily, the technical solution of the present invention will be described clearly and completely with reference to the drawings by specific embodiments. It should be noted that the embodiments described herein are not all implementation ways but only a part of the embodiments of the present invention, and the embodiments are only examples which are merely used for providing more intuitive ways for the examiner and the public to understand the contents of the present invention, but not for limiting the technical solution of the present invention. Without departing from the conception of the present invention, an ordinary person skilled in the art may think of other implementation ways without paying any creative effort, and other simple replacements and variations shall be regarded as falling into the protection scope of the present invention.

### EMBODIMENT 1

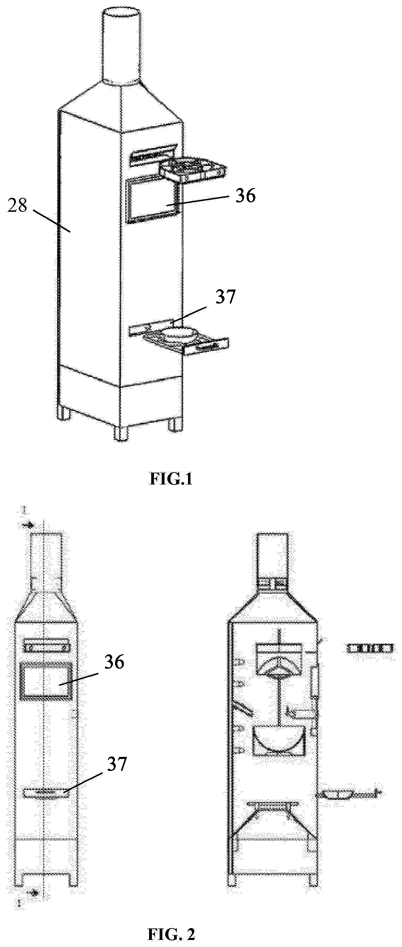

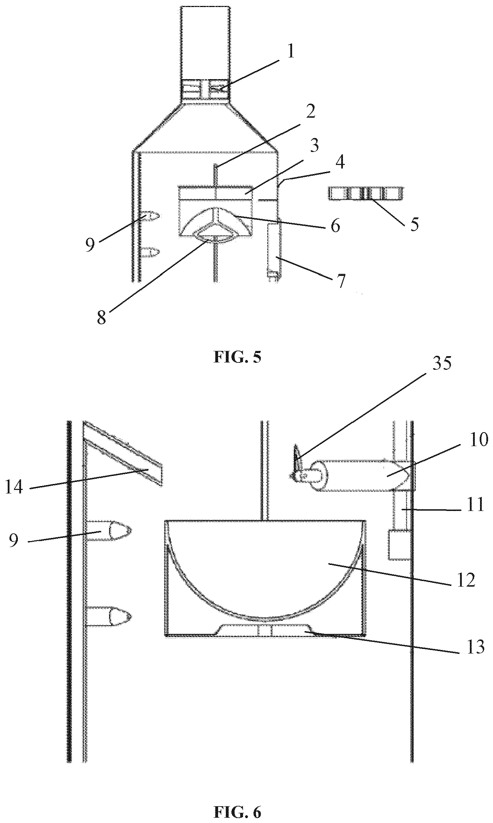

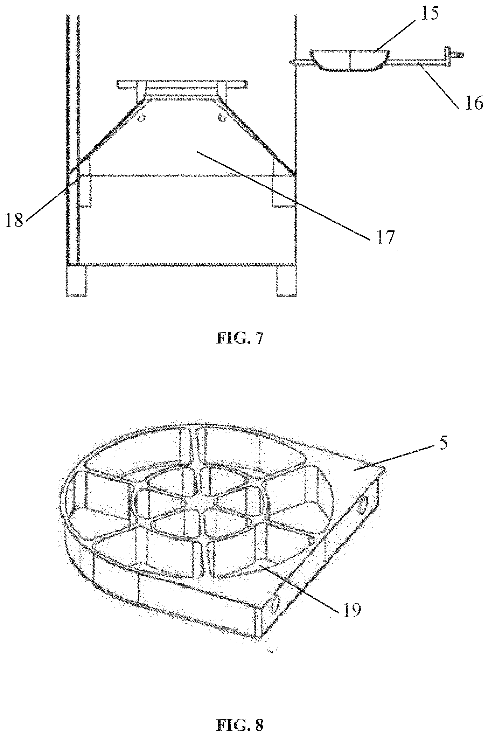

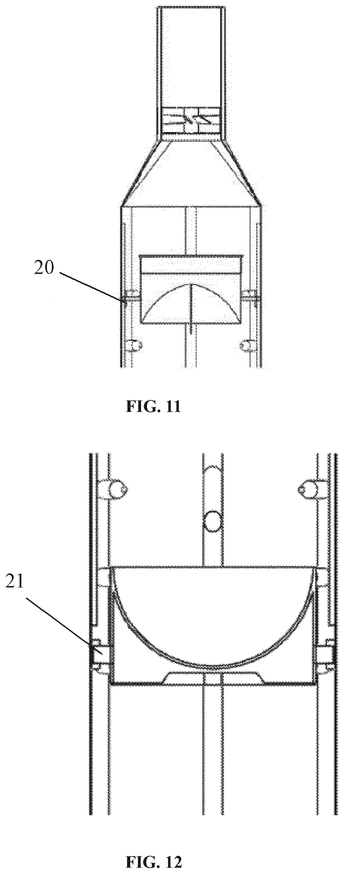

As illustrated in the FIG. 1 to FIG. 13, the present invention provides a cooking robot which saves manpower and cost without preparation process. The cooking robot includes a machine body 28, a charging mechanism, a feeding mechanism, a control system 7, a cooking mechanism and a dishes collecting mechanism, the control system is respectively connected to the charging mechanism, the feeding mechanism, the cooking mechanism and the dishes collecting mechanism, and configured to control operation of each of the mechanisms. The charging mechanism includes a feed inlet 4, a positioning bin 3 and a raw material accommodating device 5, wherein the raw material accommodating device is of a structure which is independent from the feed inlet and the positioning bin and may be detached from the cooking robot, a plurality of independent individuals (with reference to number 19 in FIG. 8) are provided at the raw material accommodating device according to the actual demand of the raw materials required for cooking the dishes, and configured to respectively accommodate the corresponding raw material hermetically; the raw material accommodating device 5 is provided with an identification device; the control system is configured to identify the dishes required to be cooked in the raw material accommodating device through the identification device, and control the feeding mechanism to charge the raw materials accommodated in the individuals of the raw material accommodating device into the cooking mechanism to cook according to the cooking requirement of the corresponding dishes in order. The control system can add and/or delete and/or replace and/or update the recipe by storage in advance and/or an external memory device and/or a network afterwards. The identification device is a bar code and/or a two-dimensional code and/or an RFID electronic tag; the raw material accommodating device may accommodate the raw material required by one or more dishes, and is a disposable raw material accommodating device. The feeding mechanism includes a dismantling device and a relative movement system, the relative movement system is connected to the cooking mechanism and/or the dismantling device and/or the positioning bin to realize the relative movement between at least two of the positioning bin, the dismantling device and the cooking mechanism. The dismantling device is a manipulator 10, and the relative movement system is a first lifting device 11; one end of the manipulator 10 is mounted on the first lifting device 11, and the other end thereof is provided with an unsealing device 35; the first lifting device is provided on an inner wall of the machine body 28; the unsealing device 35 is a spiny portion and/or a knife and/or a pair of scissors and/or a cone. The machine body 28 is further provided with a fume and air exhaust mechanism 1 and a pollutant filtering device. The control system 7 includes a host, a display 36 and a drive device, the drive device is respectively connected to the charging mechanism, the feeding mechanism, the cooking mechanism, the dishes collecting mechanism and the fume and air exhaust mechanism 1. The display 36 is provided on an outer surface of the machine body 28; a control program is arranged inside the host, and configured to display a control menu and/or a control interface through the display 36 for a user to control the cooking robot. The control system further includes a wired or wireless communication module, the communication module is connected to the host for receiving remote control information; the control system further includes an infrared signal transceiver for receiving control signal of a remote controller. The cooking mechanism is arranged between the charging mechanism and the dishes collecting mechanism, and comprises a pot body 12, a heating device 13, a stir-frying mechanism 8 and a first overturning mechanism 21, wherein the pot body and the heating device are connected to the machine body 28 through the first overturning mechanism, and the pot body and the heating device are of a pot-stove integrated structure; and the heating device is an electric heating device and/or a gas heating device.

The cooking mechanism also includes a pot lid 6 and a second overturning mechanism 20, the pot lid is connected to the machine body 28 through the second overturning mechanism, and a non-open end of the pot lid and the positioning bin 3 are configured in a fixed connection and/or a detachable connection. The pot lid and the pot body share a lifting mechanism 2.

A water supply system is also arranged inside the machine body 28, and comprises a water filling nozzle 14 and a plurality of spray nozzles 9, and the water supply system is an external water pipe or a built-in drinking water bucket; the water supply system is connected to the control system through the drive device, and configured to wash the cooking mechanism and/or fill the water to the cooking mechanism under the control of the control system.

A lower water-proof air inlet is provided at the bottom of the machine body 28, having a bottom being hermetically connected to the machine body 28 and a top being of cone structure with a narrow-mouthed through hole. A dishes container bracket is fixed on the machine body 28 or provided on the top of the water-proof air inlet through an air supporting structure. A plurality of drain outlets 18 are arranged at the hermetic connection portion between the bottom of the water-proof air inlet and the machine body 28.

An oil supply system is also arranged in the machine body 28, the oil supply system includes a built-in oil barrel or an external oil inlet pipeline, the oil supply system is connected to the control system through the drive device so as to supply oil to the cooking mechanism under the control of the control system.

The dishes collecting mechanism includes a dishes collecting container inlet 37 and a dishes container bracket 16.

A drying device and/or a sterilizing device are/is further provided on the machine body 28, and the drying device and the sterilizing device are connected to the control system through the drive device so as to dry the cooking mechanism under the control of the control system; and the sterilizing device is connected to the control system through the drive device so as to sterilize the cooking mechanism and the robot under the control of the control system.

### EMBODIMENT 2

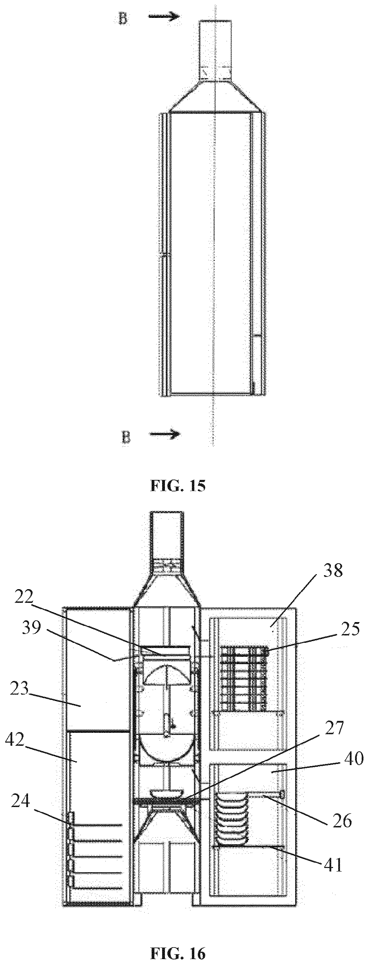

As illustrated in the FIG. 14 to FIG. 17, the present invention provides a cooking robot with an automatically and continuously frying function, in addition to the technical features mentioned in the embodiment, further including an automatic charging system and an automatic waste recovery system; the automatic charging system and the automatic waste recovery system are respectively connected to the control system; the control system is configured to control the automatic charging system to feed the raw material accommodating device to the feed inlet, and control the automatic waste recovery system to recover the empty raw material accommodating device and the waste raw material.

The cooking robot is further provided with an automatic dishes container pushing system and a dishes storage system; the automatic dishes container pushing system and the dishes storage system are respectively connected to the control system; the control system is configured to control the automatic dishes container pushing system to actively add the dishes container to the dishes collecting container inlet 37, and control the dishes storage system to store the accomplished dishes.

The automatic charging system includes at least one storage bin 38 for the raw material accommodating device, the storage bin 38 for the raw material accommodating device is connected to one side of the machine body 28 provided with the feed inlet, and provided with a second lifting device and a first pushing mechanism 25. The storage bin 38 for the raw material accommodating device is provided with a fresh keeping and/or freezing device.

The automatic waste recovery system at least includes a recovering bin 23 for the empty raw material accommodating device connected to one side of the machine body 28 which is not connected to the feed inlet, and a recovering outlet 39 for the empty raw material accommodating device is arranged at a position where the connecting portion of the machine body 28 is at the same height of the feed inlet, and a third lifting device is provided at the recovering bin for the empty raw material accommodating device; and a raw material accommodating device conveyor 22 is provided at the positioning bin of the charging mechanism.

The automatic dishes container pushing system at least includes a dishes container storage bin 40, and the dishes container storage bin 40 is connected to one side of the machine body 28 provided with the dishes collecting container inlet 37, and provided with a fourth lifting mechanism 41 and a container pushing mechanism 26. The dishes container storage bin 40 is provided with a sterilizing device.

The dishes storage system includes at least one dishes storage bin 42; the dishes storage bin 42 is connected to one side of the machine body 28 which is not connected to the dishes collecting container inlet 37, and a dishes container outlet is arranged at a position where the connecting portion of the machine body 28 is at the same height of the dishes collecting container inlet 37, and an automatic lifting shelf 24 is provided at the dishes storage bin 42; a dishes container conveyor 27 is arranged on the dishes container bracket. A heat preservation device is provided at the dishes storage bin 42.

### EMBODIMENT 3

As illustrated in the FIG. 18, the present invention also provides a cooking robot with multi-machine body 28 in order to further improve the cooking ability of the large cooking robot.

The robot includes two machine bodies of the cooking robot in embodiment 1 and/or embodiment 2, and the machine bodies share a set of control system and exhaust system.

The cooking robot of the present invention, according to various recipes, respectively and quantitatively charges a variety of raw materials, such as meat, vegetables, eggs, milk, fish, oil, salt, sauce, vinegar, sugar and water, required by the dishes into the independent sealed individuals of the raw material accommodating device, and carries out a preservation treatment in a food processing plant, and each material box is printed with a bar code or two-dimensional code or provided with a unique identification device containing an electronic tag (RFID) and the like, and contains information such as the name of the dishes. The consumer purchases a raw material box from the supermarket or through the Internet distribution, and places the raw material box into the cooking robot, the control system automatically reads and identifies the type of dishes and acquires the whole process of the dishes through the Internet or reading local memory, the process refers to first turning on the air exhaust system, overturning the pot lid, turning the raw material box downward and vertically moving it to an appropriate height, igniting (powering on) the stove, opening the package of an edible oil chamber on the raw material box by using the manipulator when the control system detects the temperature in the pot reached to a proper temperature, pouring the oil into the pot, detecting the oil temperature in real time, and then putting the raw materials according to the program order, and simultaneously adjusting the fire (heating power), overturning a pot lid system as required to cover the pot lid and stir-frying through a stir-frying mechanism in the pot lid system, repeating the above processes of feeding, covering the pot lid, stir-frying and the like for several times according to the process, automatically and quantitatively filling water as required through the water filling nozzle, and automatically turning off the fire after all the processes are accomplished. In the present invention, the stove body and the pot may be fixed together, and the fried dishes can be poured into a container preset below the stove just by overturning the pot. At this moment, the system makes a sound or voice to inform people to take the dishes away. After the dishes are taken away, the system automatically turns into a cleaning state, hot water and cleaning agent are sprayed from a plurality of spray nozzles placed at an inner surface of a sealed box body to clean the pot, the pot lid and the like, and the sewage flows into a dirt port below the box body. And then a next cycle starts.

## Claims

1. A cooking robot, comprising a machine body (28), a charging mechanism, a feeding mechanism, a control system (7), a cooking mechanism and a dishes collecting mechanism, the control system (7) is respectively connected to the charging mechanism, the feeding mechanism, the cooking mechanism and the dishes collecting mechanism, and said control system (7) is configured to control the operation of each of the mechanisms; the charging mechanism comprises a feed inlet (4), a positioning bin (3) and a raw material accommodating device (5); wherein the raw material accommodating device (5) is a structure independent from the feed inlet (4) and the positioning bin (3) and is detachable from the cooking robot; a plurality of independent individuals (19) configured to respectively accommodate the corresponding raw materials hermetically, are provided on the raw material accommodating device (5) according to the actual demand of the raw materials required for cooking the dishes; the raw material accommodating device (5) is provided with an identification device; the control system (7) is configured to identify the dishes to cook in the raw material accommodating device (5) through the identification device, and to control the feeding mechanism to charge the raw materials accommodated in the individuals of the raw material accommodating device (5) into the cooking mechanism according to a cooking requirement of the corresponding dishes; the control system (7) may add and/or delete and/or replace and/or update the recipe by storage in advance and/or by an external memory device and/or a network afterwards;
**characterized in that** the feeding mechanism comprises a dismantling device and a relative movement system; wherein the relative movement system is connected to the cooking mechanism and/or the dismantling device and/or the positioning bin (3) so as to realize the relative movement between at least two of the positioning bin (3), the dismantling device and the cooking mechanism; the relative movement system comprises at least one lifting mechanism (2); the cooking mechanism, the dismantling device and the positioning bin (3) share one lifting mechanism (2) or are respectively provided with a lifting mechanism (2);
the dismantling device is a mechanical structure; the mechanical structure moves to the raw material accommodating device (5) under the control of the control system (7), and opens the corresponding hermetic section to feed the raw material stored in the hermetic section;
wherein the dismantling device is a manipulator (10) for dismantling sealing devices of the plurality of independent individuals containing raw materials including main and auxiliary ingredients therein; and the relative movement system is a first lifting device (11); one end of the manipulator (10) is mounted on the first lifting device (11), and the other end thereof is provided with an unsealing device (35); the unsealing device (35) is a spiny portion and/or a knife and/or a pair of scissors and/or a cone

2. The cooking robot according to claim 1, **characterized in that** the identification device is a bar code and/or a two-dimensional code and/or an RFID electronic tag; the raw material accommodating device (5) may accommodate the raw materials required by one or more dishes, and is a recyclable raw material accommodating device (5) or a disposable raw material accommodating device (5).

3. The cooking robot according to claim 1, **characterized in that** the control system (7) comprises a host, a display (36) and a drive device; the drive device is respectively connected to the charging mechanism, the feeding mechanism, the control system (7), the cooking mechanism and the dishes collecting mechanism; the display (36) is provided on an outer surface of the machine body (28); a control program is arranged inside the host, and displays a control menu and/or a control interface for a user to control the cooking robot via the display (36); the control system (7) further comprises a wired or wireless communication module; the communication module is connected to the host for receiving remote control information; and the control system (7) further comprises an infrared signal transceiver for receiving control signals of a remote controller.

4. The cooking robot according to any one of claims 1-3, **characterized in that** the cooking mechanism is arranged between the charging mechanism and the dishes collecting mechanism, comprising a pot body (12), a heating device (13), a stir-frying mechanism (8) and a first overturning mechanism (21); wherein the pot body (12) and the heating device (13) are connected to the machine body (28) through the first overturning mechanism (21); the pot body (12) and the heating device (13) are a pot-stove integrated structure and/or a pot-stove separated structure; the heating device (13) is an electric heating device (13) and/or a gas heating device (13); the cooking mechanism also comprises a pot lid (6) and a second overturning mechanism (20); the pot lid (6) is connected to the machine body (28) through the second overturning mechanism (20); a non-open end of the pot lid (6) and the positioning bin (3) are in a fixed connection and/or a detachable connection; and the dishes collecting mechanism comprises a dishes collecting container inlet (37) and a dishes container bracket (16).

5. The cooking robot according to claim 4, **characterized in that** a fume and air exhaust mechanism (1) and a pollutant filtering device are arranged inside the machine body (28); the fume and air exhaust mechanism (1) is connected to the control system (7) through the drive device so as to work under the control of the control system (7); a water supply system is further arranged inside the machine body (28), and comprises a water filling nozzle and a plurality of spray nozzles (9); the water supply system is an external water pipe or a built-in drinking water bucket; the water supply system is connected to the control system (7) through the drive device, and is configured to wash the cooking mechanism and/or fill water to the cooking mechanism under the control system (7); a plurality of drain outlets (18) are further provided on the machine body (28); a drying device and/or a sterilizing device are further provided on the machine body (28); the drying device and/or a sterilizing device are connected to the control system (7) through the drive device so as to dry the cooking mechanism under the control of the control system (7); and the sterilizing device is connected to the control system through the drive device so as to sterilize the cooking mechanism and the robot under the control system (7).

6. The cooking robot according to any one of claims 1-3 and 5, **characterized in that** the cooking robot is further provided with an automatic charging system and an automatic waste recovery system; the automatic charging system and the automatic waste recovery system are respectively connected to the control system (7); the control system (7) is configured to control the automatic charging system to feed the raw material accommodating device (5) to the feed inlet (4), and to control the automatic waste recovery system to recover the empty raw material accommodating device (5) and the waste raw materials; an automatic dish container pushing system and a dish storage system are further provided on the cooking robot, and are respectively connected to the control system (7); and the control system (7) is configured to control the automatic dishes container pushing system to actively add the dishes container (15) to the dishes collecting container inlet (37), and to control the dishes storage system to store the accomplished dishes.

7. The cooking robot according to claim 6, **characterized in that** the automatic charging system comprises at least one storage bin (38) for the raw material accommodating device (5); the storage bin (38) for the raw material accommodating device (5) is connected to one side of the machine body (28) provided with the feed inlet (4); the storage bin (38) for the raw material accommodating device (5) is provided with a second lifting device and a first pushing mechanism (25); the storage bin (38) for the raw material accommodating device (5) is provided with a fresh keeping and/or freezing device; the automatic waste recovery system at least comprises a recovering bin (23) for the empty raw material accommodating device (5); the recovering bin (23) for the empty raw material accommodating device (5) is connected to one side of the machine body (28) which is not connected to the feed inlet (4); a recovering outlet (39) for the empty raw material accommodating device (5) is arranged at a position where the connecting portion of the machine body (28) is at the same height of the feed inlet (4); a third lifting device is provided on the recovering bin (23) for the empty raw material accommodating device (5); and a raw material accommodating device (5) conveyor is provided on the positioning bin (3) of the charging mechanism.

8. The cooking robot according to claim 7, **characterized in that** the automatic dishes container pushing system at least comprises a dishes container storage bin (40), the dishes container storage bin (40) is connected to one side of the machine body (28) provided with the dishes collecting container inlet (37), and the dishes container storage bin (40) is provided with a fourth lifting mechanism (41) and a container pushing mechanism (26); the dishes container storage bin (40) is provided with a sterilizing device; the dishes storage system comprises at least one dishes storage bin (42); the dishes storage bin (42) is connected to one side of the machine body (28) disconnected to the dishes collecting container inlet (37), and a dishes container outlet is arranged at a position where the connecting portion of the machine body (28) is at the same height of the dishes collecting container inlet (37), and an automatic lifting shelf (24) is provided on the dishes storage bin (42); a dishes container conveyor (27) is arranged on the dishes container bracket (16); and a heat preservation device is provided on the dishes storage bin (42).

9. A cooking robot, **characterized in that** the robot comprises at least two machine bodies of the robot of any one of claims 1-8, and the two machine bodies share a set of control system (7) and an exhaust system.

## Patentansprüche

1. Kochroboter, umfassend einen Roboterkörper (28) und einen Lademechanismus, einen Einspeisemechanismus, ein Steuersystem (7), einen Kochmechanismus und einen Gerichtssammelmechanismus, wobei das Steuersystem (7) jeweils mit dem Lademechanismus, dem Einspeisemechanismus, dem Kochmechanismus und dem Gerichtssammelmechanismus verbunden ist und den Betrieb der jeweiligen Mechanismen ansteuert; und wobei der Lademechanismus eine Ladeöffnung (4), ein Positionierungsfach (3) und eine Rohstoffsaufnahmevorrichtung umfasst, und wobei die Rohstoffsaufnahmevorrichtung (5) eine Struktur, die unabhängig von der Ladeöffnung (4) und dem Positionierungsfach (3) und von dem Kochroboter abnehmbar ist; und wobei an der Rohstoffsaufnahmevorrichtung mehrere separate Strecken (19) nach den tatsächlichen Bedürfnissen der benötigten Rohstoffe zum Kochen eines Gerichts angeordnet sind, und wobei in den jeweiligen separaten Strecken (19) jeweils die entsprechenden Rohstoffe abgedichtet aufbewahrt sind; und wobei die Rohstoffsaufnahmevorrichtung (5) mit einer Identifikationsvorrichtung versehen ist; und wobei das Steuersystem (7) in Übereinstimmung mit der Identifikationsvorrichtung die zu kochenden Gerichte in der Rohstoffsaufnahmevorrichtung (5) identifiziert und den Einspeisemechanismus dazu ansteuert, in Übereinstimmung mit den Kochbedürfnissen der entsprechenden Gerichte die in den jeweiligen Strecken in der Rohstoffsaufnahmevorrichtung (5) aufbewahrten Rohstoffe nach der Reihenfolge in dem Kochmechanismus zuzugeben und zu kochen; und wobei das Steuersystem (7) durch Speichern im Voraus und/oder durch eine externe Speichervorrichtung nachher und/oder das Netzwerk ein Kochrezept hinzufügen und/oder löschen und/oder ersetzen und/oder aktualisieren kann;
**dadurch gekennzeichnet, dass** der Einspeisemechanismus eine Demontagevorrichtung und ein Relativbewegungssystem umfasst, wobei das Relativbewegungssystem mit dem Kochmechanismus und/oder der Demontagevorrichtung und/oder dem Positionierungsfach (3) verbunden ist, so dass zumindest zwei von dem Positionierungsfach (3), der Demontagevorrichtung und dem Kochmechanismus eine Relativbewegung realisieren können; und wobei das Relativbewegungssystem zumindest einen Hubmechanismus (2) umfasst, und wobei der Kochmechanismus, die Demontagevorrichtung und das Positionierungsfach (3) gemeinsam einen Hubmechanismus (2) verwenden oder jeweils mit einem Hubmechanismus (2) versehen sind;
und wobei es sich bei der Demontagevorrichtung um eine mechanische Struktur handelt, und wobei sich die mechanische Struktur unter Steuerung des Steuersystems (7) zur Rohstoffsaufnahmevorrichtung (5) bewegt, und wobei die entsprechende geschlossene Strecke geöffnet wird, um die in der geschlossenen Strecke aufbewahrten Rohstoffe einzuspeisen;
und wobei es sich bei der Demontagevorrichtung um einen Manipulator (10) handelt, der zum Demontieren einer Dichtungsvorrichtung der separaten Strecken für die Rohstoffe einschließlich Haupt- und Hilfsmaterialien verwendet wird; und wobei es sich bei dem Relativbewegungssystem um eine erste Hubvorrichtung (11) handelt; und wobei ein Ende des Manipulators (10) an der ersten Hubvorrichtung (11) installiert und das andere Ende mit einer Entsiegelungsvorrichtung (35) versehen ist; und wobei die Entsiegelungsvorrichtung (35) in Form eines stacheligen Abschnitts und/oder eines Messers und/oder einer Schere und/oder eines Kegels ausgebildet ist.

2. Kochroboter nach Anspruch 1, **dadurch gekennzeichnet, dass** es sich bei der Identifikationsvorrichtung um einen Barcode und/oder einen zweidimensionalen Code und/oder ein elektronisches RFID-Etikett handelt; wobei die Rohstoffsaufnahmevorrichtung (5) die Rohstoffe für eine oder mehreren Gerichte aufnehmen kann, und wobei es sich bei der Rohstoffsaufnahmevorrichtung (5) um eine Aufhahmevorrichtung für recycelbare Rohstoffe (5) oder eine Aufnahmevorrichtung für Einwegrohstoffe (5) handelt.

3. Kochroboter nach Anspruch 1, **dadurch gekennzeichnet, dass** das Steuersystem (7) einen Host, einen Bildschirm (36) und eine Antriebsvorrichtung umfasst, wobei die Antriebsvorrichtung jeweils mit dem Lademechanismus, dem Einspeisemechanismus, dem Steuersystem (7), dem Kochmechanismus und dem Gerichtssammelmechanismus verbunden ist; und wobei der Bildschirm (36) an einer Außenfläche des Roboterkörpers (28) angeordnet ist; und wobei in dem Host ein Steuerprogramm installiert ist, welches durch den Bildschirm (36) ein Steuermenü und/oder eine Steuerinterface anzeigt, mit dem ein Benutzer den Kochroboter ansteuert; und wobei das Steuersystem (7) weiterhin ein drahtgebundenes oder drahtloses Kommunikationsmodul umfasst, und wobei das Kommunikationsmodul mit dem Host verbunden ist, um eine Fernsteuerungsinformation zu empfangen; und wobei das Steuersystem weiterhin eine Empfangs- und Sendevorrichtung des Infrarotsignals, um ein Steuersignal der Fernbedienung zu empfangen.

4. Kochroboter nach einem der Ansprüche 1 bis 3, **dadurch gekennzeichnet, dass** der Kochmechanismus zwischen dem Lademechanismus und dem Gerichtssammelmechanismus angeordnet ist und einen Topfkörper (12), eine Heizeinrichtung (13), einen Rühr und Brateinrichtung und einen ersten Umkippmechanismus (21) umfasst, und wobei der Topfkörper (12) und die Heizeinrichtung (13) durch den ersten Umkippmechanismus (21) mit dem Roboterkörper (28) verbunden sind, und wobei es sich bei dem Topfkörper (12) und der Heizeinrichtung (13) um eine integrierte Struktur von Topf und Herd und/oder eine getrennte Struktur Topf und Herd handelt; und wobei es sich bei der Heizeinrichtung (13) um eine elektrische Heizeinrichtung (13) und/oder eine Gasheizeinrichtung (13) handelt; und wobei der Kochmechanismus weiterhin einen Topfdeckel (6) und einen zweiten Umkippmechanismus (20) umfasst, und wobei der Topfdeckel (6) durch den zweiten Umkippmechanismus (20) mit dem Roboterkörper (28) verbunden ist, und wobei ein nicht offenes Ende des Topfdeckels (6) und das Positionierungsfach (3) derart angeordnet sind, dass sie miteinander fest und/oder trennbar verbunden sind; und wobei der Gerichtssammelmechanismus einen Einlass (37) des Gerichtsbehälters und eine Halterung (16) des Gerichtsbehälters umfasst.

5. Kochroboter nach Anspruch 4, **dadurch gekennzeichnet, dass** in dem Roboterkörper (28) weiterhin ein Rauchabzug- und Luftablassmechanismus (1) und eine Schadstofffiltereinrichtung angeordnet sind, und wobei der Rauchabzug- und Luftablassmechanismus (1) und die Schadstofffiltereinrichtung durch eine Antriebsvorrichtung mit dem Steuersystem (7) verbunden sind und unter der Steuerung des Steuersystems (7) arbeiten; und wobei in dem Roboterkörper (28) weiterhin ein Wasserzufuhrsystem angeordnet ist, und wobei das Wasserzufuhrsystem eine Wasserfüllöffnung und mehrere Düsen (9) umfasst, und wobei es sich bei dem Wasserzufuhrsystem um eine externe Wasserleitung oder einen eingebauten Trinkwassereimer handelt; und wobei das Wasserzufuhrsystem durch die Antriebsvorrichtung mit dem Steuersystem (7) verbunden ist und unter der Steuerung des Steuersystems (7) den Kochmechanismus spült und/oder Wasser in dem Kochmechanismus zugibt; und wobei an dem Roboterkörper (28) mehrere Ablassöffnungen (18) vorgesehen; und wobei in dem Roboterkörper (28) weiterhin eine Trocknungseinrichtung und/oder eine Sterilisationseinrichtung angeordnet ist, und wobei die Trocknungseinrichtung und die Sterilisationseinrichtung durch die Antriebsvorrichtung mit dem Steuersystem (7) verbunden sind und unter der Steuerung des Steuersystems (7) den Kochmechanismus trocknen; und wobei die Sterilisationseinrichtung durch die Antriebsvorrichtung mit dem Steuersystem (7) verbunden ist und unter der Steuerung des Steuersystems (7) den Kochmechanismus und den Roboter sterilisiert.

6. Kochroboter nach einem der Ansprüche 1 bis 3 und 5, **dadurch gekennzeichnet, dass** in dem Kochroboter weiterhin ein automatisches Beschickungssystem und ein automatisches Abfallrückgewinnungssystem angeordnet sind; wobei das automatische Beschickungssystem und das automatische Abfallrückgewinnungssystem jeweils mit dem Steuersystem (7) verbunden sind; und wobei das Steuersystem (7) das automatische Beschickungssystem zum Anlegen der Rohstoffsaufnahmevorrichtung (5) in der Ladeöffnung (4) ansteuert, und wobei das Steuersystem (7) das automatische Abfallrückgewinnungssystem zum Zurückgewinnen einer leeren Rohstoffsaufnahmevorrichtung (5) und der Abfallrohstoffe ansteuert; und wobei in dem Kochroboter weiterhin ein automatisches Gerichtsbehälterschiebesystem und ein Gerichtsaufbewahrungssystem angeordnet sind; und wobei das automatische Gerichtsbehälterschiebesystem und das Gerichtsaufbewahrungssystem jeweils mit dem Steuersystem (7) verbunden sind; und wobei das Steuersystem (7) das automatische Gerichtsbehälterschiebesystem zum automatischen Anlegen eines Gerichtsbehälters (15) in dem Einlass (37) des Gerichtsbehälters ansteuert, und wobei das Steuersystem (7) das Gerichtsaufbewahrungssystem zum Aufbewahren eines fertig gestellten Gerichts ansteuert.

7. Kochroboter nach Anspruch 6, **dadurch gekennzeichnet, dass** das automatische Beschickungssystem zumindest ein Vorratsfach (38) für die Rohstoffsaufnahmevorrichtung umfasst, wobei das Vorratsfach (38) für die Rohstoffsaufnahmevorrichtung (5) mit einer mit der Ladeöffnung (4) versehenen Seite des Roboterkörpers (28) verbunden ist, und wobei in dem Vorratsfach (38) für die Rohstoffsaufnahmevorrichtung (5) eine zweite Hubvorrichtung und ein erster Schiebemechanismus (25) angeordnet sind; und wobei in dem Vorratsfach (38) für die Rohstoffsaufnahmevorrichtung (5) eine Frischhalte- und/oder Gefriervorrichtung angeordnet ist; und wobei das automatische Abfallrückgewinnungssystem zumindest ein Rückgewinnungsfach (23) für die leere Rohstoffsaufnahmevorrichtung (5) umfasst, und wobei das Rückgewinnungsfach (23) für die leere Rohstoffsaufnahmevorrichtung (5) mit einer nicht an die Ladeöffnung (4) angeschlossenen Seite des Roboterkörpers (28) verbunden ist, und wobei ein Rückgewinnungsöffnung (39) für die leere Rohstoffsaufnahmevorrichtung (5) an einer Position an der Verbindungsstelle an dem Roboterkörper mit gleicher Höhe wie der der Ladeöffnung angeordnet ist, und wobei in dem Rückgewinnungsfach (23) für die leere Rohstoffsaufnahmevorrichtung (5) eine dritte Hubvorrichtung angeordnet ist; und wobei in einem Positionierungsfach (3) des Lademechanismus eine Fördervorrichtung der Rohstoffsaufnahmevorrichtung (5) angeordnet ist.

8. Kochroboter nach Anspruch 7, **dadurch gekennzeichnet, dass** das automatische Gerichtsbehälterschiebesystem zumindest ein Aufbewahrungsfach (40) des Gerichtsbehälters umfasst, wobei das Aufbewahrungsfach (40) des Gerichtsbehälters mit einer mit dem Einlass (37) des Gerichtsbehälters versehenen Seite des Roboterkörpers (28) verbunden ist, und wobei in dem Aufbewahrungsfach (40) des Gerichtsbehälters eine vierte Hubmechanismus (41) und ein Behälterschiebemechanismus (26) angeordnet sind; und wobei in dem Aufbewahrungsfach (40) des Gerichtsbehälters eine Sterilisationseinrichtung angeordnet ist; und wobei das Gerichtsaufbewahrungssystem zumindest ein Gerichtsaufbewahrungsfach (42) umfasst, und wobei das Gerichtsaufbewahrungsfach (42) mit einer nicht an den Einlass (37) des Gerichtsbehälters angeschlossenen Seite des Roboterkörpers (28) verbunden ist, und wobei ein Auslass (37) des Gerichtsbehälters an einer Position an der Verbindungsstelle mit gleicher Höhe wie der des Einlasses (37) des Gerichtsbehälters vorgesehen ist, und wobei in dem Gerichtsaufbewahrungsfach (42) ein automatisches Hubregal (24) angeordnet ist; und wobei auf der Halterung (16) des Gerichtsbehälters eine Fördervorrichtung (27) des Gerichtsbehälters angeordnet ist; und wobei in dem Gerichtsaufbewahrungsfach (42) eine Wärmehalteeinrichtung angeordnet ist.

9. Kochroboter, **dadurch gekennzeichnet, dass** der Roboter zumindest zwei Roboterkörper nach einem der Ansprüche 1 bis 8 umfasst, wobei die jeweiligen Roboterkörper einen Satz von Steuersystem (7) und Luftablasssystem gemeinsam verwenden.

## Revendications

1. Un robot de cuisson, comprenant un corps de machine (28), un mécanisme de chargement, un mécanisme d'alimentation, un système de commande (7), un mécanisme de cuisson et un mécanisme de recueil de plat, ledit système de commande (7) est connecté audit mécanisme de chargement, audit mécanisme d'alimentation, audit mécanisme de cuisson et audit mécanisme de recueil de plat, respectivement, et ledit système de commande (7) est configuré pour commander le fonctionnement de chaque mécanisme; ledit mécanisme de chargement comprend une entrée de chargement (4), une caisse de positionnement (3) et un dispositif de réception de matières premières (5); dans lequel ledit dispositif de réception de matières premières (5) est une structure indépendante de ladite entrée de chargement (4) et de ladite caisse de positionnement (3) et est détachable dudit robot de cuisson; une pluralité d'individus indépendants (19) configurés pour respectivement recevoir les matières premières correspondantes hermétiquement, sont disposés sur ledit dispositif de réception de matières premières (5) en fonction de la demande réelle en matières premières nécessaires pour faire la cuisine; ledit dispositif de réception de matières premières (5) est pourvu d'un dispositif d'identification; ledit système de commande (7) est configuré pour identifier les plats à cuisiner par ledit dispositif d'identification dans ledit dispositif de réception de matières premières (5), et pour commander ledit mécanisme d'alimentation afin de charger ledit mécanisme de cuisson des matières premières logées dans lesdits individus du dispositif de réception de matières premières (5) selon un critère de cuisson des plats correspondants; ledit système de commande (7) peut ajouter et/ou supprimer et/ou remplacer et/ou renouveler les recettes par stockage préalable et/ou par un dispositif de mémoire externe et/ou un réseau par la suite;
**caractérisé en ce que** ledit mécanisme d'alimentation comprend un dispositif de démontage et un système de déplacement relatif; dans lequel ledit système de déplacement relatif est connecté audit mécanisme de cuisson et/ou audit dispositif de démontage et/ou à ladite caisse de positionnement (3), afin de réaliser le déplacement relatif entre au moins deux de ladite caisse de positionnement (3), ledit dispositif de démontage et ledit mécanisme de cuisson; ledit système de déplacement relatif comprend au moins un mécanisme de levage (2); ledit mécanisme de cuisson, ledit dispositif de démontage et ladite caisse de positionnement (3) partagent un mécanisme de levage (2) ou sont respectivement pourvus d'un mécanisme de levage (2);
ledit dispositif de démontage est une structure mécanique; ladite structure mécanique se déplace vers ledit dispositif de réception de matières premières (5) sous le contrôle dudit système de commande (7) et ouvre la section hermétique correspondante pour alimenter les matières premières stockées dans ladite section hermétique;
dans lequel ledit dispositif de démontage est un manipulateur (10) pour démanteler des dispositifs d'étanchéité de la pluralité d'individus indépendants contenant des matières premières, y compris les ingrédients principaux et auxiliaires; et ledit système de déplacement relatif est un premier dispositif de levage (11); une extrémité dudit manipulateur (10) est montée sur ledit premier dispositif de levage (11), et l'autre extrémité de celui-ci est pourvue d'un dispositif de descellement (35); ledit dispositif de descellement (35) est une partie épineuse et/ou un couteau et/ou des ciseaux et/ou un cône.

2. Le robot de cuisson selon la revendication 1, **caractérisé en ce que** ledit dispositif d'identification est un code à barres et/ou un code bidimensionnel et/ou une étiquette électronique RFID; ledit dispositif de réception de matières premières (5) peut contenir les matières premières nécessaires pour un ou plusieurs plats, et est un dispositif de réception de matières premières recyclable (5) ou un dispositif de réception de matières premières jetable (5).

3. Le robot de cuisson selon la revendication 1, **caractérisé en ce que** ledit système de commande (7) comprend un hôte, un affichage (36) et un dispositif d'entraînement; ledit dispositif d'entraînement est connecté audit mécanisme de chargement, audit mécanisme d'alimentation, audit système de commande (7), audit mécanisme de cuisson et audit mécanisme de recueil de plat, respectivement; ledit affichage (36) est disposé sur une surface extérieure dudit corps de machine (28); un programme de contrôle est disposé à l'intérieur de l'hôte et affiche un menu de système et/ou une interface de commande permettant à un utilisateur de commander ledit robot de cuisson via ledit affichage (36); ledit système de commande (7) comprend en outre un module de communication câblée ou un module de communication sans fil; ledit module de communication est connecté à l'hôte pour recevoir des informations de télécommande; et ledit système de commande (7) comprend en outre un émetteur-récepteur de signal infrarouge pour recevoir les signaux de commande du contrôleur à distance.

4. Le robot de cuisson selon l'une quelconque des revendications 1 à 3, **caractérisé en ce que** ledit mécanisme de cuisson est disposé entre ledit mécanisme de chargement et ledit mécanisme de recueil de plat, comprenant un corps de poêle (12), un dispositif de chauffage (13), un mécanisme de sauté (8) et un premier mécanisme de retournement (21); dans lequel ledit corps de poêle (12) et ledit dispositif de chauffage (13) sont connectés audit corps de machine (28) par ledit premier mécanisme de retournement (21); ledit corps de poêle (12) et ledit dispositif de chauffage (13) sont une structure intégrée de poêle-cuisinière et/ou une structure séparée de poêle-cuisinière; ledit dispositif de chauffage (13) est un dispositif de chauffage électrique (13) et/ou un dispositif de chauffage au gaz (13); le mécanisme de cuisson comprend également un couvercle du poêle (6) et un deuxième mécanisme de retournement (20); ledit couvercle du poêle (6) est connecté audit corps de machine (28) par ledit deuxième mécanisme de retournement (20); une extrémité non ouverte du couvercle du poêle (6) et ladite caisse de positionnement (3) assemblent par une connexion fixe et/ou détachable; et ledit mécanisme de recueil de plat comprend une entrée de récipient de plat (37) et un support de récipient de plat (16).

5. Le robot de cuisson selon la revendication 4, **caractérisé en ce qu'**un mécanisme d'évacuation de fumées et d'air (1) et un dispositif de filtration de polluants sont disposés à l'intérieur dudit corps de machine (28); ledit mécanisme d'évacuation des fumées et d'air (1) est connecté audit système de commande (7) par ledit dispositif d'entraînement afin de fonctionner sous le contrôle dudit système de commande (7); un système d'alimentation en eau est en outre disposé à l'intérieur dudit corps de machine (28) et comprend une buse de remplissage d'eau et une pluralité de buses de pulvérisation (9); ledit système d'alimentation en eau est un tuyau d'eau externe ou un seau d'eau potable intégré; ledit système d'alimentation en eau est connecté audit système de commande (7) par ledit dispositif d'entraînement et est configuré pour laver ledit mécanisme de cuisson et/ou remplir le mécanisme de cuisson d'eau sous le contrôle dudit système de commande (7); une pluralité de sorties de drainage (18) sont en outre prévues sur ledit corps de machine (28); un dispositif de séchage et/ou un dispositif de stérilisation sont en outre prévus sur ledit corps de machine (28); ledit dispositif de séchage et/ou ledit dispositif de stérilisation sont connectés audit système de commande (7) par ledit dispositif d'entraînement afin de sécher ledit mécanisme de cuisson sous le contrôle dudit système de commande (7); et ledit dispositif de stérilisation est connecté audit système de commande par ledit dispositif d'entraînement afin de stériliser ledit mécanisme de cuisson et le robot sous le contrôle dudit système de commande (7).

6. Le robot de cuisson selon l'une quelconque des revendications 1 à 3 ou 5, **caractérisé en ce que** ledit robot de cuisson est en outre pourvu d'un système de chargement automatique et d'un système de récupération des déchets automatique; ledit système de chargement automatique et ledit système de récupération des déchets automatique sont respectivement connectés audit système de commande (7); ledit système de commande (7) est configuré pour commander ledit système de chargement automatique afin de charger ledit dispositif de réception de matières premières (5) sur ladite entrée de chargement (4), et pour commander ledit système de récupération des déchets automatique afin de récupérer le dispositif de réception de matières premières vide (5) et les déchets de matières premières; un système automatique pour pousser les récipients de plat et un système de stockage de plat sont en outre prévus sur ledit robot de cuisson et sont respectivement connectés audit système de commande (7); et ledit système de commande (7) est configuré pour commander ledit système automatique pour pousser les récipients de plat afin de charger activement les récipients de plat (15) sur ladite entrée de récipient de plat (37), et pour commander ledit système de stockage de plat afin de stocker les plats accomplis.

7. Le robot de cuisson selon la revendication 6, **caractérisé en ce que** ledit système de chargement automatique comprend au moins une caisse de stockage (38) pour ledit dispositif de réception de matières premières (5); ladite caisse de stockage (38) pour ledit dispositif de réception de matières premières (5) est connectée à un côté dudit corps de machine (28) muni de ladite entrée de chargement (4); ladite caisse de stockage (38) pour ledit dispositif de réception de matières premières (5) est pourvue d'un deuxième dispositif de levage et d'un premier mécanisme de poussée (25); ladite caisse de stockage (38) pour ledit dispositif de réception de matières premières (5) est pourvue d'un dispositif de conservation au frais et/ou de congélation; ledit système de récupération des déchets automatique comprend au moins une caisse de récupération (23) pour ledit dispositif de réception de matières premières vide (5); ladite caisse de récupération (23) pour ledit dispositif de réception de matières premières vide (5) est connectée à un côté dudit corps de machine (28) qui n'est pas connecté à ladite entrée de chargement (4); une sortie de récupération (39) pour ledit dispositif de réception de matières premières vide (5) est située à la jonction de ladite caisse de récupération et dudit corps de machine, et à la même hauteur que ladite entrée de chargement (4); un troisième dispositif de levage est prévu sur ladite caisse de récupération (23) pour ledit dispositif de réception de matières premières vide (5); et un convoyeur de dispositif de réception de matières premières (5) est prévu sur ladite caisse de positionnement (3) du mécanisme de chargement.

8. Le robot de cuisson selon la revendication 7, **caractérisé en ce que** ledit système automatique pour pousser les récipients de plat comprend au moins une caisse de stockage de récipients de plat (40), ladite caisse de stockage de récipients de plat (40) est connectée à un côté dudit corps de machine (28) pourvu avec ladite entrée de récipient de plat (37), et ladite caisse de stockage de récipients de plat (40) est pourvu d'un quatrième mécanisme de levage (41) et d'un mécanisme pour pousser les récipients (26); ladite caisse de stockage de récipients de plat (40) est prévue d'un dispositif de stérilisation; ledit système de stockage de plat comprend au moins une caisse de stockage de plat (42); ladite caisse de stockage de plat (42) est connectée à un côté dudit corps de machine (28) déconnecté de ladite entrée de récipient de plat (37), et une sortie de récipient de plat est située à la jonction de ladite caisse de stockage de plat et dudit corps de machine, et à la même hauteur que ladite entrée de récipient de plat (37); et une étagère de levage automatique (24) est prévue sur ladite caisse de stockage de plat (42); un convoyeur de récipient de plat (27) est disposé sur ledit support de récipient de plat (16); et un dispositif de conservation de chaleur est prévu sur ladite caisse de stockage de plat (42).

9. Un robot de cuisson, **caractérisé en ce que** le robot comprend au moins deux corps de machine du robot selon l'une quelconque des revendications 1 à 8, et lesdits deux corps de machine partagent un système de commande (7) et un système d'évacuation.
